# EUROPÄISCHE PATENTSCHRIFT

(11) **EP 0 780 660 B1**
(45) Veröffentlichungstag und Bekanntmachung des Hinweises auf die Patenterteilung: **03.08.2005**
(21) Anmeldenummer: 96118190.6
(22) Anmeldetag: 13.11.1996
(51) Int. Cl.: G01B 7/012, G01B 7/00

(54) **Tastsystem für Koordinatenmessgeräte**
Probe system for coordinate measuring machines
Système de palpation pour machines de mesure de coordonnées

(30) Priorität: 21.12.1995 DE 19547977
(43) Veröffentlichungstag der Anmeldung: 25.06.1997
(73) Patentinhaber: Carl Zeiss Industrielle Messtechnik GmbH, 73447 Oberkochen (DE)
(72) Erfinder: Prinz, Reinhard, 73431 Aalen (DE)
(74) Vertreter: Henckell, Carsten

(56) Entgegenhaltungen:
- EP-A- 0 420 416
- WO-A-89/11631
- DE-A- 27 181
- DE-U- 9 105 459
- US-A- 4 118 871
- US-A- 4 670 989

## Beschreibung

Die Tastsysteme von Koordinatenmeßgeräten für die taktile Vermessung von Werkstücken lassen sich in zwei Klassen einteilen, in Tastköpfe vom sogenannten messenden Typ und in solche vom schaltenden Typ. Während Tastköpfe vom messenden Typ dauernd ein der Auslenkung des nachgiebig gelagerten Taststifts proportionales Signal liefern und damit auch zur kontinuierlichen Abtastung von Werkstückoberflächen im sogenannten Scanning-Betrieb geeignet sind, erzeugen Tastköpfe vom schaltenden Typ bei Berührung des Werkstücks ein impulsförmiges Signal. Hier muß also die Werkstückoberfläche punktweise jeweils neu angetastet werden, wenn deren Lage oder Form mit einem schaltenden Tastsystem bestimmt werden soll.

Schaltende Tastsysteme besitzen meistens einen elektromechanischen Schaltkontakt im Lager für den nachgiebig aufgenommenen Taststift. Dieser Schaltkontakt ist sehr empfindlich eingestellt und öffnet, sobald sich der Taststift bei Berührung mit dem Werkstück gegenüber dem maschinenfesten Teil des Tastkopfs bewegt.

Um die Empfindlichkeit derartiger Tastköpfe zu steigern ist auch schon vorgeschlagen worden, hochempfindliche z.B. piezoelektrische Sensoren im Taststiftträger oder im Taststift selbst einzubauen, um den Kontakt mit dem Werkstück schon bei kleinsten Reaktionskräften zwischen dem Werkstück und dem Antastformkörper, d.h. der Tastkugel feststellen zu können. Ein derartiger Tastkopf ist beispielsweise in der DE-PS 27 12 181, der DE-OS 28 20 813 und der DE-OS 33 09 122 beschrieben. Allerdings läßt sich auch mit diesen Tastköpfen der Antastzeitpunkt nicht zuverlässig und exakt erfassen. Das hat mehrere Gründe. Zum einen ergibt sich insbesondere bei längeren Taststiften eine Verzögerungszeit zwischen der allerersten Berührung des Werkstücks und dem Ansprechen des Sensors bedingt durch die Laufzeit der Druck- bzw. Schallwelle vom Antastformkörper bis zum Sensor, abhängig von den für den Taststift bzw. dessen Verlängerungen etc. verwendeten Materialien. Weiterhin kann die beim Antasten erzeugte Schallwelle auf ihrem Weg zum Sensor durch destruktive Interferenzen geschwächt werden. Dies macht sich insbesondere dann negativ bemerkbar, wenn beispielsweise beim Antasten von weichen Werkstücken nur sehr wenig mechanische Stoßenergie übertragen wird und der Sensor deshalb statt der Schallwelle erst den sich sehr viel später aufbauenden statischen Druck wahrnimmt, der beim Weiterfahren des Tastkopfs auf die Werkstückoberfläche entsteht.

Es ist auch schon vorgeschlagen worden, den Sensor in der Nähe des Antastformkörpers anzuordnen (Figur 8 in der erstgenannten DE-PS 27 12 181). Derartige Taststifte sind jedoch bisher nicht realisiert worden. Denn einmal bereitet die Verdrahtung und sichere Kontaktgabe der in der Regel auswechselbaren Taststifte mit empfindlichen Signalleitungen Probleme. Zum anderen werden oft auch mehrere Taststifte zu komplexen Tasterkonfigurationen an einen Tastkopf angebaut und können nicht ohne weiteres mit den Signalleitungen der Sensoren parallel geschaltet werden. Der Sensor wird deshalb üblicherweise tastkopfseitig der Wechselstelle zu den Taststiften angeordnet und man versucht die Probleme in Bezug auf Schallaufzeit und Signalintensität auf andere Weise zu beseitigen.

Weiterhin ist vorgeschlagen worden, den Antastzeitpunkt mit interferometrischen Sensoren genau zu bestimmen, die durch den hohlen Taststift hindurch eine Spiegelfläche am Antastformkörper anmessen wie das z.B. in der DE-PS 39 20 716 und in der DE-OS 42 44 240 beschrieben ist. Aber auch diese Lösung ist offensichtlich weder für auswechselbare Taststifte noch für das gleichzeitige Befestigen von mehreren Taststiften am Tastkopf eines Koordinatenmeßgerätes besonders gut geeignet.

Das US-Patent 4,118,871 zeigt einen Tastkopf, bei dem ein batteriebetriebener Oszillator vorgesehen ist, an dem ein Taststift mit hieran befestigter Tastkugel befestigt ist. Der Taststift wirkt hierbei als Antenne des batteriebetriebenen Oszillators, die laufend elektromagnetische Strahlung aussendet. Wenn die Tastkugel ein Werkstück berührt, wird dieser elektromagnetische Schwingkreis -- so das Dokument -- "kurzgeschlossen", sodass ein steiler Abfall der Amplitude der elektromagnetischen Strahlung entsteht. Dies wird von einem außerhalb des Tastkopfes befestigten Empfänger detektiert und als Antastsignal ausgewertet.

Die WO 89/11631 zeigt einen Prüfkörper mit einem in seiner Mitte drehbar gelagerten, horizontal ausgerichteten Stab, an dessen Enden über druckempfindliche Sensoren kugelförmige Elemente befestigt sind, die vom Tastkopf eines Koordinatenmessgerätes angetastet werden können. Bei der Antastung eines kugelförmigen Elementes geben die Sensoren ein die Antastung definierendes Signal ab.

Die EP 0 420 416 A2 zeigt ebenfalls einen Prüfkörper, der auf dem Messtisch eines Koordinatenmessgerätes befestigt werden kann. Der Prüfkörper weist einen vertikalen Ständer auf, an dessen Ende ein kugelförmiges Element befestigt ist, das vom Tastkopf eines Koordinatenmessgerätes angetastet werden kann. Im Bereich des kugelförmigen Elementes befindet sich im vertikalen Ständer ein "Piezzoarray", das bei Berührung der Kugel ein elektrisches Signal abgibt.

Die DE 91 05 459.1 U1 zeigt ein Abstandsmessgerät zur Messung des Abstandes zwischen zwei Messpunkten, die durch nichtmetallische Medien getrennt sind. Dieses weist ein Sendermodul auf, das am ersten Messpunkt aufgestellt wird und das ein niederfrequentes, magnetisches Wechselfeld erzeugt, sowie ein Empfangsmodul, welches am zweiten Messpunkt aufgestellt wird und das empfangene magnetische Wechselfeld über Induktion detektiert. Aus der Stärke der im Empfänger induzierten Spannung wird der Abstand bestimmt.

Das US-Patent US 4,670,989 zeigt eine Werkzeugmaschine mit einem schaltenden Tastkopf, dessen Taststift bei Berührung mit einem Werkstück wenigstens einen von drei Kontakten öffnet. Hierdurch sendet eine hiermit verbundene elektrische Schaltung, die ein Öffnen eines solchen Kontaktes detektiert, ein Mikrowellensignal aus, das von einem zugeordneten Empfänger der Werkzeugmaschine empfangen wird und als Antastsignal genutzt wird.

Schließlich ist es auch bekannt, Werkstücke direkt auf der Bearbeitungsmaschine zu vermessen, indem dort anstelle des Bearbeitungswerkzeuges ein Tastkopf in den Morsekegel der Werkzeugaufnahme eingesetzt wird. Dafür werden in der Regel autarke, batterieversorgte Tastköpfe verwendet, da an dieser Stelle keine elektrischen Leitungen für die Stromversorgung und Signalweiterleitung vorgesehen sind. Bei derartigen Tastköpfen wird das Tastsignal dann per Funk oder Infrarotstrahlung oder auch induktiv vom Tastkopf zur Werkzeugmaschine übertragen. Beschrieben sind derartige schaltende Tastköpfe für die Werkzeugmaschine beispielsweise in der DE-OS 34 22 102 und der gleichlautenden US-PS 46 08 763, der US-PS 45 09 266, der US-PS 45 78 874 sowie der US-PS 46 70 989. Alle dort beschriebenen Tastköpfe benutzen jedoch den im Lager des beweglichen Taststifts befindlichen Schaltkontakt, um den Antastimpuls zu generieren, der dann drahtlos weiter übermittelt wird. Die mit dem Abstand zwischen Sensor und Antastformkörper zusammenhängenden, eingangs genannten Probleme werden damit weder gelöst, ja nicht einmal angesprochen, denn für die in Werkzeugmaschinen verwendeten Taster werden von Haus aus geringere Anforderungen an die Antastgenauigkeit gestellt, als für Tastköpfe, die an KMG Verwendung finden.

Es ist die Aufgabe der vorliegenden Erfindung, ein Tastsystem für Koordinatenmeßgeräte zu schaffen, mit dem der Antastzeitpunkt möglichst genau erfaßt werden kann.

Diese Aufgabe wird mit den im Anspruch 1 angegebenen Merkmalen gelöst.

Da der Sensor in der Nähe des Antastformkörpers angeordnet ist, entfallen durch Schallaufzeiten, destruktive Interferenzen etc. verursachte Probleme der eingangs genannten Art. Weiterhin wird auf eine Verkabelung der Sensoren verzichtet und stattdessen jedem Sensor ein eigener Sender zugeordnet. Die Sensoren sind deshalb entkoppelt und es können ohne weiteres mehrere Taststifte gemeinsam an einen Tastkopf angeschlossen werden. Zudem sind Kontaktprobleme auch nach mehrfachem Wechseln der Taststifte ausgeschlossen.

Gemäß der Erfindung wird also die endliche Schallgeschwindigkeit auf der Strecke zwischen Antastformkörper und Sensor ersetzt durch die sehr viel höhere Lichtgeschwindigkeit, mit der sich die am Antastformkörper erzeugte elektromagnetische Welle ausbreitet. Der dafür erforderliche Sender arbeitet vorzugsweise im Bereich oberhalb von 10 MHz, beispielsweise im UKW-Bereich. Solche Sender können preiswert und einfach sowie in den erforderlichen geringen Abmessungen hergestellt und in den Taststift integriert werden. Die Empfängerschaltung für die elektromagnetische Welle, die das Antastsignal repräsentiert, kann entweder im Tastkopf selbst oder auch beispielsweise im Meßarm oder in der Steuerelektronik des Koordinatenmeßgerätes angeordnet werden. Abgesehen davon, daß hier möglichst zu weite Wege vermieden werden sollten, damit mit sehr geringen Sendeenergien gearbeitet werden kann, die beispielsweise aus dem Stoßimpuls zwischen Antastformkörper und Werkstück selbst gewonnen werden, sind hinsichtlich der Anordnung des Empfängers keine Einschränkungen zu beachten.

Als Energiequelle bzw. Energiespeicher für den Betrieb der Sendeschaltung können Batterien dienen oder Kondensatoren, die beispielsweise über eine Solarzelle nachgeladen werden oder über einen piezoelektrischen Kristall, der zweckmäßig gleichzeitig die Funktion des Sensors für das Tastsignal erfüllt. Diese Energiespeicher werden vorteilhaft ebenfalls in unmittelbarer Nähe des Antastformkörpers beispielsweise in den Taststift integriert. Die zuletzt angesprochene Möglichkeit, den Energiespeicher mittels der vom piezoelektrischen Sensor in ein elektronisches Signal gewandelten Stoßenergie des Antastvorganges zu laden, ist besonders vorteilhaft, weil dann keinerlei zusätzliche Energiequellen benötigt werden.

Weitere vorteilhafte Ausgestaltungen der Erfindung ergeben sich aus der nachfolgenden Beschreibung von Ausführungsbeispielen anhand der Figuren 1-5 der beigefügten Zeichnungen.
- Figur 1: ist eine vereinfachte Skizze der mechanischen Komponenten eines erfindungsgemäßen Tastsystems für ein KMG;
- Figur 2a: ist eine vergrößerte Darstellung des Taststifts (12c) aus Figur 1;
- Figur 2b: ist ein alternatives Ausführungsbeispiel für den Taststift (12c) aus Figur 2a;
- Figur 3: ist ein Blockschaltbild der elektronischen Komponenten des Tastsystems nach Figur 1;
- Figur 4 und 5: sind Blockschaltbilder von alternativen Ausführungsbeispielen der Senderelektronik (14c) aus Figur 3.

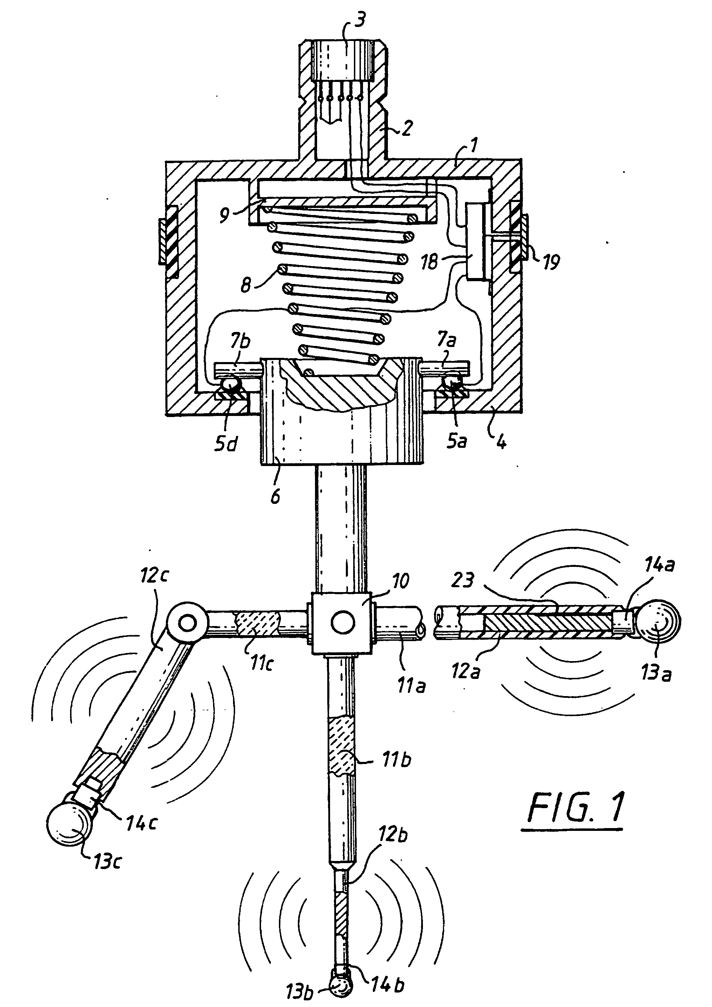

Das in Figur 1 dargestellte Tastsystem besteht im wesentlichen aus einem Tastkopf mit einem zylindrischen Gehäuse (1), das über einen ebenfalls zylindrischen Aufnahmezapfen (2) an den Meßarm eines Koordinatenmeßgerätes angesetzt werden kann. In den Aufnahmezapfen (2) ist ein Stecker (3) zur Übertragung von elektrischen Versorgungsleitungen, Signalleitungen etc. integriert. Diese Steckkontakte sind mit einer Schaltung (18) im Tastkopf verbunden, die nachfolgend noch beschrieben wird.

Das zylindrische Gehäuse (1) ist bodenseitig offen und dort mit einem Ringbund (4) versehen, in den isoliert drei um 120° gegeneinander versetzte Kugelpaare (5a,5b) eingeklebt sind. In den durch diese Kugelpaare (5a,5b) gebildeten Kerben ist der auslenkbare Teil (6) des Tastkopfs, der sogenannte Taststiftträger mittels dreier radial abstehender Zylinderkörper (7a-c) statisch eindeutig bestimmt gelagert und wird von einer Feder (8) in dieses Lager gedrückt, die sich gegen eine Platte (9) am anderen Ende des Gehäuses (1) abstützt.

Am Taststiftträger (6) sind über einen Montagewürfel (10) mehrere Taststiftverlängerungen (11a,11b,11c) auswechselbar befestigt.

Diese Verlängerungen bestehen beispielsweise aus CFK-Rohren (11a), oder aus Keramik bzw. Metallzylindern (11c,11b). An die Verlängerungen angesetzt sind die eigentlichen Taststifte (12a,12b,12c) mit dem Antastformkörper, d.h. der Tastkugel (13a,13b,13c) aus einem harten Material wie beispielsweise Saphir, letzterer Taststift (12c) verfügt über ein Gelenk, mit dem sich der Taststift (12c) winklig ausrichten läßt.

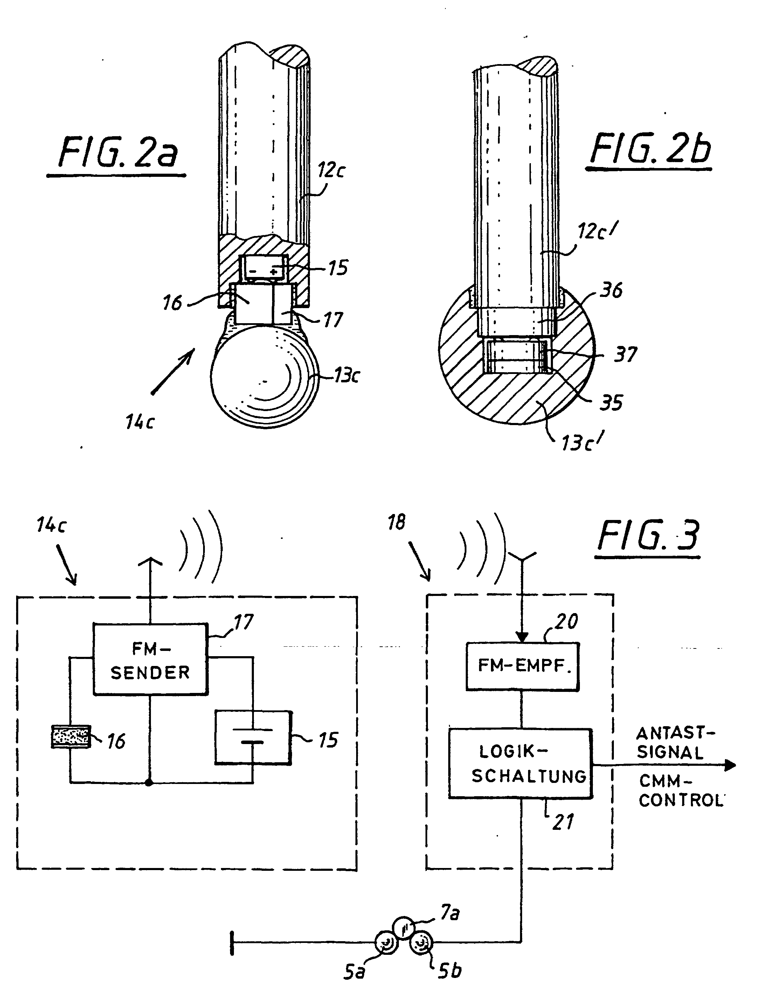

Wie aus der vergrößerten Darstellung nach Figur 2 hervorgeht ist die Tastkugel (13c) nicht direkt an dem metallischen Taststift (12c) befestigt sondern über ein Bauteil (14c). Dieses Bauteil (14c) besteht aus einem piezoelektrischen Kristall (16) und einem direkt mit diesem verbundenen Siliziumsubstrat, in das die wesentlichen Teile einer Hochfrequenz-Sendeschaltung integriert sind. Dieses Substrat ist mit den übrigen Bauteilen des Miniatur-Hochfrequenzsenders wie z.B. dem Schwingquarz und der Spule zu einer Dickschichtschaltung (17) zusammengefaßt, die von einer ebenfalls im Taststift aufgenommenne Mikrobatterie (15) versorgt wird. Das Blockschaltbild dieser elektronischen Anordnung ist in Figur 3 dargestellt.

Aktiviert wird die Sendeschaltung (17) durch das Signal des piezoelektrischen Elementes (16), das entsteht, sobald die Tastkugel (13c) das zu vermessende Werkstück berührt. Die Sendeschaltung arbeitet bei einer Frequenz oberhalb von 10 MHz und sendet über eine einstellbare Zeit eine elektromagnetische Welle aus, die beispielsweise von einem Empfänger im Tastkopf (1) detektiert wird wie nachher noch beschrieben werden wird. Die Sendezeit läßt sich von wenigen µsec bis ca. 1 sec Dauer einstellen, abhängig von der realisierten Spannungsversorgung. Eine Zeitdauer von 10µsec für den Sendeimpuls ist bereits ausreichend, um diesen zuverlässig zu detektieren. Als Antenne dient der metallische Taststift (12c).

Auch an der Verbindungsstelle der übrigen Taststifte (12a) zur Tastkugel (13a) sowie (12b) zur Tastkugel (13b) sind entsprechende piezoelektrische Sensoren mit Hochfrequenz-Sendeschaltungen (14a,14b) vorgesehen, die durch den Kontakt der Tastkugel mit dem Werkstück kurzzeitig aktiviert werden. In den aus einem hohlen CFK-Rohr bestehenden Taststift (12a) ist ein zusätzlicher Draht (23) eingeklebt, der als Senderantenne wirkt. Die beim Antastvorgang erzeugten Hochfrequenzimpulse werden von einer Empfängerschaltung (18) im Tastkopf (1) (Figur 1) detektiert. Hierzu ist die Schaltung (18) mit einer ringförmigen um das Gehäuse (1) gelegten Antenne (19) verbunden. Das Blockschaltbild der Empfängerschaltung (18) zeigt die Figur 3. Es handelt sich hierbei um einen konventionellen auf die Sendefrequenz abgestimmten FM-Empfänger (20), dessen Ausgang an eine Logikschaltung (21) angeschlossen ist. Die Logikschaltung generiert ein digitales Antastsignal, sobald eine bestimmte Mindestanzahl von Schwingungen auf der Resonanzfrequenz des FM-Empfängers detektiert worden sind, beispielsweise sieben Schwingungen. Dieses Signal dient wie auch bisher schon das Signal des piezoelektrischen Sensors bei herkömmlichen schaltenden Tastköpfen dazu, die relevanten Signale in der Steuerung des Koordinatenmeßgerätes, die die momentane Stellung der Meßschlitten beschreiben festzuhalten, bzw. zwischenzuspeichern. Ob eine gültige oder ungültige Antastung vorliegt, wird anschließend über ebenfalls an sich bekannte Verifizierungsschaltungen ermittelt. Hierzu ist die Logikschaltung (21) mit den in Reihe geschalteten Schaltkontakten (5/7), d.h. mit den drei Kugelpaaren verbunden, die das Lager für die Zylinderstifte (7a-c) des beweglichen Taststiftträgers bilden.

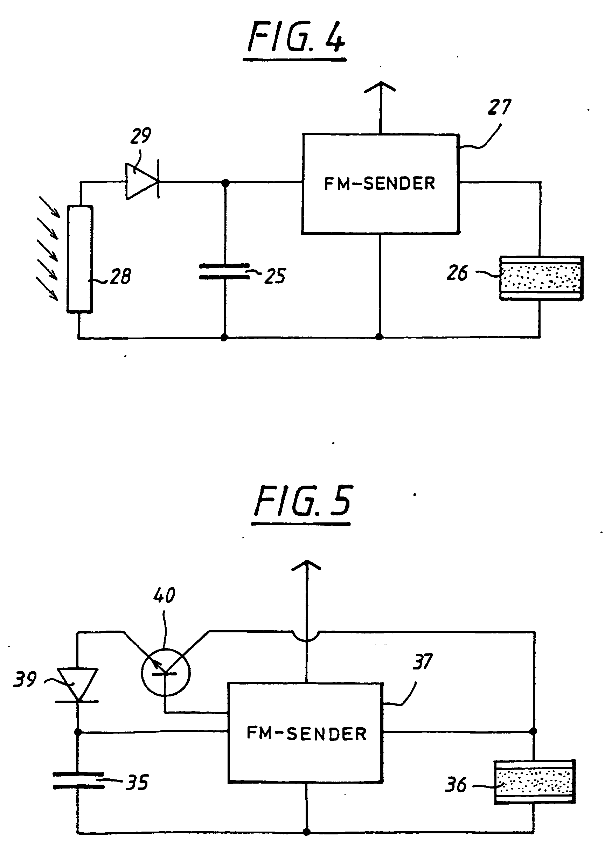

Im vorstehenden Ausführungsbeispiel wurde eine Miniaturbatterie zur Energieversorgung der Sendeschaltung (17) eingesetzt. Eine derartige Batterie erfüllt ihre Aufgabe über einen Zeitraum von mehreren Jahren. Anschließend müßte der damit versehene Taster allerdings ausgetauscht werden. Es ist jedoch auch möglich, wie in Figur 4 gezeigt, als Energiespeicher einen Kondensator (25) vorzusehen, wie er z.B. in Solar-Armbanduhren verwendet wird, und diesen über eine am Taststift außen angebrachte Solarzelle (28) nachzuladen, wie das in Figur 4 dargestellt ist. Dort ist mit (29) eine Diode für den Entladeschutz des Kondensators (25) bezeichnet. Die Hochfrequenz-Schaltung trägt hier das Bezugszeichen (27) und der Piezokristall das Bezugszeichen (26).

In dem besonders vorteilhaften Ausführungsbeispiel nach Figur 5 wird auch auf die Solarzelle verzichtet. Stattdessen wird der Kondensator (35) von dem bereits als Sensor dienenden Piezokristall (36) über die Entladeschutzdiode (39) mit der beim Antastvorgang entstehenden, überschüssigen Energie aufgeladen. Die Grundladung des Kondensators (35) kann auch über Störimpulse erfolgen, die auftreten, wenn das Koordinatenmeßgerät fährt, bzw. kann durch einen Initialisierungslauf erfolgen, bei dem das Werkstück oder ein anderer Gegenstand mehrfach schnell hintereinander angetastet wird. Um zu verhindern, daß der Antastimpuls bzw. das Antastsignal des piezoelektrischen Sensors (36) durch den Speicherkondensator (35) in der Anfangsphase gedämpft wird, ist ein elektronischer Schalter (40) vorgesehen, der die Verbindung zwischen dem piezoelektrischen Sensor (36) und dem Kondensator (35) mit zeitlicher Verzögerung freischaltet, so daß die ansteigende Flanke des Antastsignals ungedämpft für das sofortige Starten des Hochfrequenzschwingkreises in der Schaltung (37) zur Verfügung steht.

Im Beispiel für die mechanische Ausführung nach Figur 2b ist die Tastkugel mit einer Bohrung versehen, in die ein Speicherkondensator (35) eingesetzt ist, sowie die Dickschichtschaltung (37) des Senderschaltkreises. In dem darüberliegenden Teil der Bohrung mit etwas größerem Durchmesser ist der piezoelektrische Kristall (36) befestigt und mit dem stirnseitigen Ende des Taststifts (12c) verbunden.

Bei den vorstehend beschriebenen Ausführungsbeispielen war der Sensor an einen Hochfrequenzschaltkreis angeschlossen. Stattdessen kann aber auch eine Schaltung verwendet werden, die ein optisches Signal, beispielsweise ein Infrarotsignal aussendet.

## Patentansprüche

1. Tastsystem für Koordinatenmessgeräte mit einem Antastformkörper (13a-c; 13c'), einem Taststift (12a-c; 12c') und einem Sensor (16, 26, 36), der in unmittelbarer Nähe des Antastformkörpers (13a-c; 13c') angeordnet ist
**dadurch gekennzeichnet, dass**
der Sensor (16, 26 ,36) mit einer ebenfalls in der Nähe des Antastformkörpers angeordneten Schaltung (17, 27, 37) verbunden ist, die beim Ansprechen des Sensors eine elektromagnetische Welle aussendet, wobei der Sensor und die Schaltung zwischen dem Taststift und dem Antastformkörper angeordnet sind.

2. Tastsystem nach Anspruch 1, **dadurch gekennzeichnet, dass** der Sensor (16,26,36) ein piezoelektrischer Kristall ist.

3. Tastsystem nach einem der Ansprüche 1-2, **dadurch gekennzeichnet, dass** die Schaltung (17,27,37) ein Hochfrequenzsender ist, der vorzugsweise bei Frequenzen oberhalb 10 MHz arbeitet.

4. Tastsystem nach einem der Ansprüche 1-3, **dadurch gekennzeichnet, dass** die Schaltung (17,27,37) mit einem Energiespeicher (15,25,35) verbunden ist, der ebenfalls in unmittelbarer Nähe des Antastformkörpers angeordnet ist.

5. Tastsystem nach Anspruch 4, **dadurch gekennzeichnet, dass** der Energiespeicher (25) ein Kondensator ist, der über eine Solarzelle nachgeladen wird.

6. Tastsystem nach Anspruch 2 und 4, **dadurch gekennzeichnet, dass** der Energiespeicher (35) ein Kondensator ist, der über einen piezoelektrischen Kristall nachgeladen wird.

7. Tastsystem nach einem der Ansprüche 1-6, **dadurch gekennzeichnet, dass** der Sensor (36) und/oder die Schaltung (37) in einer Ausnehmung des Antastformkörpers (13c') angeordnet ist.

8. Koordinatenmessgerät mit einem Tastsystem nach einem der Ansprüche 1-7, **dadurch gekennzeichnet, dass** das Koordinatenmeßgerät zur Detektion der elektromagnetischen Welle weiterhin eine Empfängerschaltung (20) besitzt, die vorzugsweise im Tastkopf (1), oder im Meßarm oder in der Steuerelektronik des Koordinatenmessgeräts angeordnet ist.

9. Koordinatenmessgerät mit einem Tastsystem nach Anspruch 8, **dadurch gekennzeichnet, dass** die Empfängerschaltung (20) an eine Logikschaltung (21) angeschlossen ist, die zusätzlich mit einem Schalter bzw. Schaltkontakt (5/7) im Lager für den nachgiebig gelagerten Teil des Tastkopfs (1) des Koordinatenmessgeräts verbunden ist.

## Claims

1. Probe system for coordinate measuring machines, having a shaped sensing body (13a-c; 13c'), a feeler (12a-c; 12c') and a sensor (16, 26, 36) which is arranged in the immediate vicinity of the shaped sensing body (13a-c; 13c'), **characterized in that** the sensor (16, 26, 36) is connected to a circuit (17, 27, 37) which is likewise arranged in the vicinity of the shaped sensing body and emits an electromagnetic wave when the sensor responds, the sensor and the circuit being arranged between the feeler and the shaped sensing body.

2. Probe system according to Claim 1, **characterized in that** the sensor (16, 26, 36) is a piezoelectric crystal.

3. Probe system according to one of Claims 1-2, **characterized in that** the circuit (17, 27, 37) is a high-frequency transmitter which preferably operates at frequencies above 10 MHz.

4. Probe system according to one of Claims 1-3, **characterized in that** the circuit (17, 27, 37) is connected to an energy store (15, 25, 35) which is likewise arranged in the immediate vicinity of the shaped sensing body.

5. Probe system according to Claim 4, **characterized in that** the energy store (25) is a capacitor which is recharged via a solar cell.

6. Probe system according to Claims 2 and 4, **characterized in that** the energy store (35) is a capacitor which is recharged via a piezoelectric crystal.

7. Probe system according to one of Claims 1-6, **characterized in that** the sensor (36) and/or the circuit (37) are/is arranged in a recess in the shaped sensing body (13c').

8. Coordinate measuring machine having a probe system according to one of Claims 1-7, **characterized in that** in order to detect the electromagnetic wave the coordinate measuring machine further has a receiver circuit (20) which is preferably arranged in the probe head (1) or in the measuring arm or in the electronic control system of the coordinate measuring machine.

9. Coordinate measuring machine having a probe system according to Claim 8, **characterized in that** the receiver circuit (20) is connected to a logic circuit (21) which is additionally connected to a switch or switch contact (5/7) in the bearing for the flexibly mounted part of the probe head (1) of the coordinate measuring machine.

## Revendications

1. Système de palpage pour appareils de mesure de coordonnées comprenant un corps de forme de palpage (13a-c ; 13c'), une pointe de palpage (12a-c ; 12c') et un capteur (16, 26, 36) qui est monté à proximité immédiate du corps de forme de palpage (13a-c ; 13c'), **caractérisé en ce que** le capteur (16, 26, 36) est relié à un circuit (17, 27, 37) qui est lui aussi monté à proximité du corps de forme de palpage et qui, en cas de déclenchement du capteur, émet une onde électromagnétique, le capteur et le circuit étant montés entre la pointe de palpage et le corps de forme de palpage.

2. Système de palpage selon la revendication 1, **caractérisé en ce que** le capteur (16, 26, 36) est un cristal piézoélectrique.

3. Système de palpage selon l'une des revendications 1 et 2, **caractérisé en ce que** le circuit (17, 27, 37) est un émetteur à haute fréquence qui fonctionne de préférence dans les fréquences supérieures à 10 MHz.

4. Système de palpage selon l'une des revendications 1 à 3, **caractérisé en ce que** le circuit (17, 27, 37) est relié à un accumulateur d'énergie (15, 25, 35) qui est lui aussi monté à proximité immédiate du corps de forme de palpage.

5. Système de palpage selon la revendication 4, **caractérisé en ce que** l'accumulateur d'énergie (25) est un condensateur qui est rechargé par une cellule solaire.

6. Système de palpage selon la revendication 2 et 4, **caractérisé en ce que** l'accumulateur d'énergie (35) est un condensateur qui est rechargé par un cristal piézoélectrique.

7. Système de palpage selon l'une des revendications 1 à 6, **caractérisé en ce que** le capteur (36) et/ou le circuit (37) est monté dans un creux du corps de forme de palpage (13c').

8. Appareil de mesure de coordonnées comprenant un système de palpage selon l'une des revendications 1 à 7, **caractérisé en ce que** l'appareil de mesure de coordonnées, pour la détection des ondes électromagnétiques, possède en plus un circuit récepteur (20) qui est monté de préférence dans la tête de palpage (1) ou dans le bras de mesure ou dans le circuit électronique de commande de l'appareil de mesure de coordonnées.

9. Appareil de mesure de coordonnées comprenant un système de palpage selon la revendication 8, **caractérisé en ce que** le circuit récepteur (20) est raccordé à un circuit logique (21) qui est en plus relié à un commutateur ou à un contact de commutation (5/7) dans le palier pour la partie de la tête de palpage (1) de l'appareil de mesure de coordonnées qui est logée de manière à pouvoir fléchir.
